# EUROPÄISCHE PATENTSCHRIFT

(11) **EP 0 955 220 B1**
(45) Veröffentlichungstag und Bekanntmachung des Hinweises auf die Patenterteilung: **27.08.2003**
(21) Anmeldenummer: 99105610.2
(22) Anmeldetag: 19.03.1999
(51) Int. Cl.: B60S 1/34, F16B 41/00

(54) **Wischarm für eine Scheibenwischeranlage**
Wiper arm for a windscreen wiping system
bras pour système d'essuie-glace

(30) Priorität: 08.05.1998 DE 19820556
(43) Veröffentlichungstag der Anmeldung: 10.11.1999
(73) Patentinhaber: Valeo Wischersysteme GmbH, 74321 Bietigheim-Bissingen (DE)
(72) Erfinder: Scholl, Wolfgang, 74376 Gemmrigheim (DE); Bienert, Herbert, 74354 Besigheim (DE); Traub, Andrea, 74229 Oedheim (DE)
(74) Vertreter: Dreiss, Fuhlendorf, Steimle & Becker

(56) Entgegenhaltungen:
- EP-A- 0 724 991
- WO-A-95/25025
- FR-A- 2 640 211
- FR-A- 2 746 741

## Beschreibung

Die Erfindung bezieht sich auf einen Wischarm für eine Scheibenwischeranlage, insbesondere für ein Kraftfahrzeug, dessen Befestigungsteil drehfest an einer Wischerwelle oder einer Achse befestigbar ist und eine Durchstecköffnung für die Wischerwelle bzw. Achse aufweist, wobei die Durchstecköffnung des Befestigungsteils wenigstens teilweise als Innenkonus ausgebildet ist und der eingreifende Teil der Wischerwelle bzw. Achse als korrespondierender Außenkonus ausgebildet ist, wobei des Weiteren das freie Ende der Wischerwelle bzw. Achse ein Bolzengewinde aufweist, auf das eine Befestigungsmutter oder dergleichen Befestigungsmittel mit Außenbund aufschraubbar ist, die sich auf einer im Gebrauch von der KFZ-Scheibe wegweisenden Fläche des Befestigungsteils abstützt, wobei in der Aufschraubendstellung die Konusflächen aneinander gepreßt sind.

Ein solcher Wischerarm ist beispielsweise durch die WO-A-95/25025 bekannt geworden. Bei solchen Wischarmen ist es ganz wichtig, daß sie einerseits problemlos und rasch sowie ohne Sonderwerkzeuge an der Wischerwelle befestigt werden können und daß andererseits ein Abnehmen ohne Beschädigung der letzteren bzw. des Wischerarms möglich ist.

Aus der bekannten Druckschrift geht bereits hervor, daß die Befestigungsmutter zugleich auch eine Abziehfunktion übernimmt.

Es liegt die Aufgabe vor, einen Wischarm der eingangs beschriebenen Art so weiterzubilden, daß unter Beibehaltung der geschilderten Vorteile eine einfache und damit preiswerte Ausbildung des Befestigungsteils im Bereich der Wischerwelle möglich ist und Befestigungsteile verschiedener Funktionen verwendbar sind.

Zur Lösung dieser Aufgabe wird erfindungsgemäß vorgeschlagen, daß der Wischarm gemäß dem Oberbegriff des Anspruchs 1 die im kennzeichnenden Teil dieses Anspruchs aufgeführten Merkmale aufweist.

Ein wesentliches Element dieses Wischarms ist das Zentrierund Halteteil. Es ist auf die Wischerwelle aufschiebbar und sichert auf diese Weise die genaue rechtwinklige Zuordnung des Befestigungsteiles zur Wischerwelle bzw. Achse. In die Aufnahme des Zentrier- und Halteteils wird das festzuhaltende Ende des Befestigungsteils so weit eingeschoben, daß dessen Innenkonus mit der Durchgangsbohrung des Zentrier- und Halteteils fluchtet. Anschließend montiert man dann, vorzugsweise in gleicher Richtung wie das Befestigungsteil eingeschoben wird, die Befestigungsmutter oder dergleichen. Auch sie wird so weit in das Zentrier- und Halteteil eingeschoben bis ihr Muttergewinde mit der Durchgangsbohrung bzw. dem Innenkonus etwa fluchtet. Jetzt kann die so hergestellte Einheit auf das freie mit einem Gewindezapfen ausgestattete Ende der Wischerwelle bzw. Achse aufgesetzt werden. Damit die Befestigungsmutter verliersicher bereitgestellt wird, wird sie durch ein Sicherungselement an ihrem Platz im Zentrierund Halteteil gehalten.

Durch Aufschrauben der Befestigungsmutter wird der Wischarm an der Wischerwelle bzw. Achse befestigt, wobei dieses Aufschrauben in bekannter Weise vorgenommen werden kann. Beim Aufschrauben dringt dann der Konus der Wischerwelle in den Gegenkonus des Befestigungsteils ein, bis er dort unter Pressung zur Anlage kommt.

Um die Montage des Wischarmes an der Wischerwelle bzw. Achse zu vereinfachen, kann das Zentrier- und Halteteil mit eingeschobener Befestigungsmutter auch am Befestigungsteil arretiert sein, wodurch eine vorgefertigte Baueinheit gebildet ist.

Die Demontage erfolgt in umgekehrter Weise durch einfaches Abschrauben der Befestigungsmutter oder dergleichen vom Gewindezapfen der Wischerwelle bzw. Achse. Falls sich dabei der Bund der Befestigungsmutter an eine gegen die Scheibe des Kraftfahrzeugs weisenden Fläche des Zentrier- und Halteteils abstützt, übernimmt die Befestigungsmutter in bekannter Weise eine Abziehfunktion. Nach dem Abheben des Wischarms von der Wischerwelle bzw. Achse kann das Zentrierund Halteteil mit der Befestigungsmutter vom Befestigungsteil abgezogen werden.

In weiterer Ausgestaltung der Erfindung befindet sich die Durchgangsbohrung des Zentrier- und Halteteils an einem Ansatz des letzteren. Das verbessert die Lagesicherung vor dem Festziehen der Befestigungsmutter. Im Sinne einer Material- und Abmessungsminimierung ist der Ansatz vorzugsweise rohrförmig ausgebildet.

Eine Weiterbildung der Erfindung ergibt sich aus Anspruch 3. Das darin näher beschriebene Zentrier- und Halteteil entspricht demjenigen der beigefügten Zeichnung. Es kann einstückig gefertigt werden und läßt sich als Massenartikel preiswert herstellen. Gerade letzteres ist bei Wischerarmen wichtig, da sie selbst Massenartikel darstellen.
Selbstverständlich ist die Dimensionierung der Aufnahme des Zentrier- und Halteteils so zu wählen, daß die Teile leicht eingeschoben und herausgenommen werden können, und daß der Bund der Befestigungsmutter oder dergleichen genügend Anlagefläche bei der Abziehfunktion vorfindet.

Bei dem im Anspruch 4 beschriebenen Sicherungselement kann es sich gemäß der zeichnerischen Darstellung um einen einfachen hohlen Zapfen mit Außenbund handeln, der einerseits leicht klemmend gehalten und andererseits über seinen radial vorstehenden Bund auch leicht ausgehoben werden kann. Der Angriffsteil der Befestigungsmutter ist in sehr vorteilhafter und an sich bekannter Weise ein Mehrkant, insbesondere ein Sechskant, den man leicht mit einem entsprechenden, rohrförmigen Mutternschlüssel auf- und abschrauben kann.

Das im Anspruch 7 angesprochene Befestigungsteil kann mit Ausnahme seines wellenseitigen Endes in der Weise gestaltet sein, wie es sich aus der genannten WO-A-95/25025 ergibt und wie man es auch in der Praxis bereits kennt. Weil aber sein Befestigungsende einfacher gestaltet ist, beispielsweise in der Art einer gelochten Lasche, sind seine Herstellungskosten gegenüber dem bekannten Stand der Technik geringer. Andererseits gestattet es aber eine nahe am Wischerlager gelegene Montage.

Ein ganz besonderer Vorteil der Verwendung des erfindungsgemäß eingesetzten Zentrier- und Halteteils ergibt sich gemäß Anspruch 7 dadurch, daß das Befestigungsteil ein Antriebshebel oder ein Steuerhebel eines Viergelenk-Wischarms ist. Insofern handelt es sich beim Zentrier- und Halteteil um ein universell einsetzbares Multifunktionsteil.

Die weitere Ausgestaltung gemäß Anspruch 8 ist im Zusammenhang mit einem Viergelenkwischarm von ganz besonderer Bedeutung. Das hängt vor allem damit zusammen, daß das zentrier- und Halteteil über die Rändelung am rohrförmigen Ansatz bzw. an der Wischerwelle eine drehfeste Verbindung beider Teile ermöglicht und sich auf diese Weise während der Montage die Wischerwelle bzw. Achse in Drehrichtung halten läßt. Diesem Festhalten der Wischerwelle bzw. Achse kommt beim Aufschrauben und Demontieren der Befestigungsmutter besondere Bedeutung zu, weil diese somit ohne Zuhilfenahme eines Werkzeugs, insbesondere eines speziellen Werkzeugs, auf- oder abgeschraubt werden kann. Bei der Rändelung kann es sich um eine Gestaltung handeln, wie man sie von der sogenannten Hirth-Verzahnung her kennt. Somit bringt diese Ausgestaltung eine erhebliche Vereinfachung und Verbilligung der Montage eines Viergelenk-Wischarms.

Die Erfindung wird nachstehend anhand der Zeichnung näher erläutert. Die Zeichnung zeigt zwei Ausführungsbeispiele der Erfindung. Hierbei stellen dar:
- Figur 1: einen abgebrochenen Längsmittelschnitt durch einen Wischarm im Bereich der Wischerwelle;
- Figur 2: eine entsprechende Darstellung einer zweiten Variante der Erfindung; und
- Figur 3: perspektivisch das Zentrier- und Halteteil.

Der Wischarm 1 kann abgesehen von seiner erfindungsgemäßen Ausbildung ansonsten von bekannter Bauart sein. Aus diesem Grunde ist er in der Zeichnung nicht näher dargestellt. Er wird in nachstehend näher beschriebener Weise mit einer Wischerwelle 2 drehfest verbunden, welche in ebenfalls nicht gezeigter Weise von einem Motor reversierend angetrieben wird. Zur Lagerung der Wischerwelle 2 dient ein Wischerlager 3.

Erfindungsgemäß ist mit der Wischerwelle 2 bzw. der Achse 2a ein Zentrier- und Halteteil 4 drehfest verbunden. Es nimmt das zugewandte Ende eines Befestigungsteils 5 auf. An diesem von der Wischerwelle 2 bzw. der Achse 2a abgewandten, nicht dargestellten Ende ist ein Wischarm-Gelenkteil mit einer Wischerstange schwenkbar gelagert. Außerdem ist daran auch noch, vorzugsweise indirekt, das eine Ende einer Anpreßdruckfeder befestigt. Weil es aber auf diese Ausgestaltungen im Zusammenhang mit der vorliegenden Erfindung nicht ankommt, sind diese bekannten Details nicht dargestellt. Erwähnt sei noch, daß an der Wischstange ein bekanntes Wischblatt abnehmbar befestigt ist.

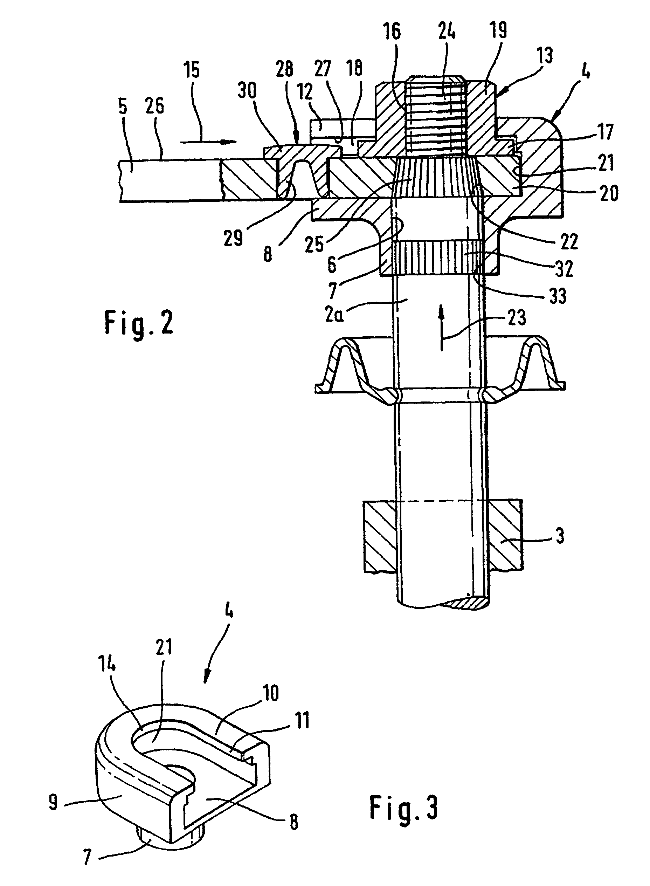

Das Befestigungsteil 5 kann im Sinne der Erfindung auch ein Viergelenkwischarm sein. Dieser besitzt einen Antriebshebel, der drehfest mit der angetriebenen Wischerwelle 2 verbunden werden muß, und einen Steuerhebel, der drehfest mit einer nicht angetriebenen Achse 2a verbunden werden muß, die in einem karosseriefesten Lager drehbar gelagert ist (Figur 2). Der Antriebshebel und der Steuerhebel stellen also jeweils ein Befestigungsteil 5 im Sinne der Erfindung dar. Soweit es von Bedeutung ist, wird darauf nachstehend noch näher eingegangen.

Das Zentrier- und Halteteil 4 weist eine Durchgangsbohrung 6 auf, welche in der Montageendstellung von der Wischerwelle 2 bzw. Achse 2a durchsetzt ist. Um eine gute Zentrierung und einen kippsicheren Halt zu gewährleisten, befindet sich der Großteil dieser Durchgangsbohrung 6 an einem rohrförmigen, in der Zeichnung nach unten ragenden Ansatz 7 des Zentrierund Halteteils 4.

Ansonsten besteht das Zentrier- und Halteteil 4 im wesentlichen aus einer Platte 8 (Figur 3) mit dem angeformten rohrförmigen Ansatz 7 sowie einem sich nach entgegengesetzter Richtung erstreckenden U-förmigen Haltesteg 9, dessen freier Rand zur Bildung eines Niederhalters 10 nach innen hin abgewinkelt ist. Die parallelen Schenkel der Innenkante 11 bilden einen Einführschlitz 12 (Figur 2) für eine Befestigungsmutter 13. Das bogenförmige innere Ende 14 der Innenkante 11 dient als Anschlag für die in Pfeilrichtung 15 eingeschobene Befestigungsmutter 13. Wenn letztere ganz eingeschoben ist, so fluchtet das Muttergewinde 16 mit der Durchgangsbohrung 6.

Die Befestigungsmutter 13 besitzt einen Außenbund 17, der sich im Innenraum 18 des Zentrier- und Halteteils 4 befindet. Der eigentliche Mutterkörper durchsetzt den Einführschlitz 12 nach oben hin, also bezogen auf den rohrförmigen Ansatz 7 nach entgegengesetzter Richtung. Zumindest der außen überstehende Teil der Befestigungsmutter 13 bildet den Angriffsteil 19 der Befestigungsmutter 13, wobei es sich bevorzugterweise um einen Sechskant handelt. Auf diesen kann ein bekannter, mit Innensechskant ausgestatteter rohrförmiger Mutternschlüssel aufgesteckt werden, um die Mutter zu drehen, d. h. auf das Muttergewinde 16 der Wischerwelle 2 bzw. Achse 2a aufzuschrauben oder auch bei der Demontage davon abzuschrauben.

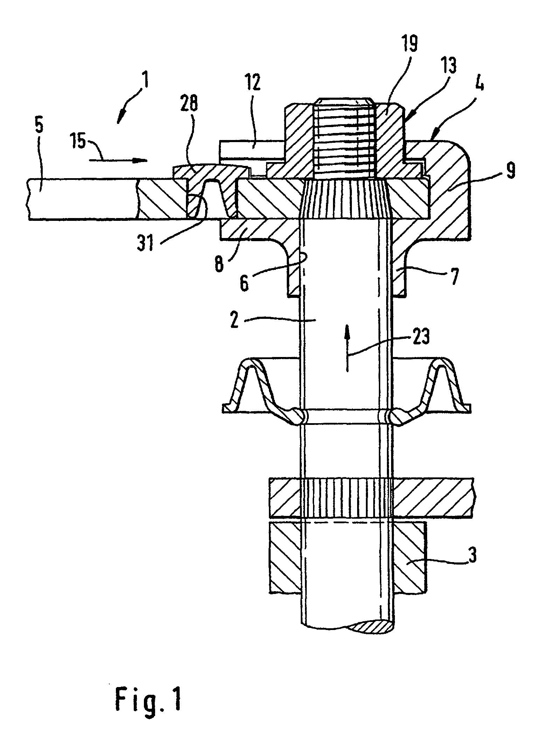

Das Einsteckende 20 des Befestigungsteils 5, also beispielsweise eines Steuerhebels oder eines Antriebshebels eines Viergelenk-Wischerarms, ist von ganz einfacher Gestalt und gleichbleibender Dicke, was natürlich geringe Herstellungskosten mit sich bringt. Die Form kann der Höhlung bzw. dem Innenraum 18 des Zentrier- und Halteteils 4 entsprechen. Auf jeden Fall wird es so weit eingeschoben, bis es mit geringem Spiel nahe der bogenförmigen Innenfläche 21 angekommen ist. Den Figuren 1 und 2 entnimmt man, daß die gesamte U-förmige Innenfläche des Haltestegs 9 absatzartig abgesetzt ist, so daß das Befestigungsteil 5 beim Einschieben entlang der Oberseite der Platte 8 gleitet und gegen den Niederhalter 10 hin nicht angehoben werden kann. Dadurch bleibt ein Spaltraum übrig, der das bequeme Einschieben der Befestigungsmutter 13 gewährleistet. In Längsrichtung der Wischerwelle 2 gesehen, ist gemäß beispielsweise Figur 2 ein ausreichendes Spiel für den Außenbund 17 vorhanden.

Das eingesteckte Ende 20 des Befestigungsteils 5 ist mit einer Durchstecköffnung 22 in Form eines Innenkonus ausgestattet. In der Einsteckendlage fluchtet sie mit der Durchgangsbohrung 6 ebenso wie das Muttergewinde 16 der Befestigungsmutter 13. Somit ist es leicht möglich, von unten her im Sinne des Pfeils 23 die Wischerwelle 2 bzw. Achse 2a in die Einheit aus Zentrier- und Halteteil 4, Befestigungsteil 5 und Befestigungsmutter 13 einzuschieben bzw. diese Einheit von oben her auf die kraftfahrzeugfeste Wischerwelle 2 bzw. Achse 2a aufzustecken. Der Gewindezapfen 24 der Wischerwelle 2 bzw. Achse 2a steht dann unmittelbar vor dem in der Zeichnung unteren Ende des Muttergewindes 16. Wenn man daraufhin in der geschilderten Weise mittels eines am Angriffsteil 19 der Befestigungsmutter 13 angreifenden Mutternschlüssels die Mutter dreht, so führt dies zum Aufschrauben auf den Gewindezapfen 24. Dabei wird die genannte Einheit entgegen dem Pfeil 23 immer weiter auf das freie Ende der Wischerwelle 2 bzw. Achse 2a aufgeschoben. Am Ende der Montage liegt der Außenkonus 25 der Wischerwelle 2 bzw. Achse 2a, welcher sich unmittelbar unterhalb dem Gewindezapfen 24 befindet und welcher dem Innenkonus der Durchstecköffnung 22 in Form und Größe entspricht, am genannten Innenkonus des Befestigungsteils 5 satt an. Dabei liegt dann das untere Ende der Befestigungsmutter 13 mit dem Außenbund 17 fest auf der in der Zeichnung nach oben weisenden Fläche 26 des Befestigungteils 5 an und preßt dessen Einsteckende 20 fest an den Boden des Zentrier- und Halteteils 4 bzw. dessen Platte 8 an.

Aus dem Vorstehenden wird deutlich, daß das Abschrauben der Befestigungsmutter 13 eine Abziehfunktion für den gesamten Wischarm 1 von der Wischerwelle 2 bzw. Achse 2a beinhaltet. Dabei legt sich zunächst der Außenbund 17 an die Unterseite 27 des Niederhalters 10 an. Beim Weiterdrehen in Abschraubrichtung wird über die Gewindeverbindung der Innenkonus der Durchstecköffnung 22 des Befestigungsteils 5 vom Außenkonus 25 der Wischerwelle 2 bzw. Achse 2a abgehoben. Wenn schließlich die Befestigungsmutter 13 vom Gewindezapfen 24 vollständig abgeschraubt ist, kann die ganze Einheit abgenommen werden.

Damit die in den Innenraum 18 des Zentrier- und Halteteils 4 eingeschobene Bundmutter entgegen dem Pfeil 15 nicht mehr herausfallen kann, wird am Befestigungsteil 5 noch ein Sicherungselement 28 angebracht. Es handelt sich bevorzugterweise um einen Stopfen mit einem rohrförmigen Schaft 29 sowie einem im Durchmesser größeren Kopf 30, welcher sich an der Oberfläche 26 des Befestigungsteils 5 abstützt. Er liegt dann im Bewegungsbereich des Außenbunds 17 der Befestigungsmutter 13, so daß diese mit relativ viel Spiel im Innenraum 18 sicher gehalten ist. Für das Sicherungselement 28 ist am Befestigungsteil 5 ein dem Schaftquerschnitt des Sicherungselements 28 entsprechender Durchbruch 31 vorgesehen.

Eine beim Ausführungsbeispiel der Figur 1 nicht vorgesehene besondere Weiterbildung der vorliegenden Erfindung zeigt Figur 2. Im Abstand vom Außenkonus 15 befindet sich nämlich an der Achse 2a eine Rändelung 32, Verzahnung oder dergleichen. Eine entsprechende Gegenverzahnung 33 oder Innenrändelung ist in der Bohrung 6 am rohrförmigen Ansatz 7 des Zentrier- und Halteteils 4 angebracht. Wenn die Achse 2a sich gemäß Figur 2 in ihrer Montageendstellung befindet, so sind die Rändelung und Gegenrändelung bzw. Verzahnungen 32, 33 im Eingriff, wodurch dann der gesamte Wischerarm drehfest mit der Achse 2a gekuppelt ist. Bereits mit dem Aufsetzen des Wischerarms auf die Wischerwelle 2 beginnt dieser Verzahnungs-Eingriff und damit die drehfeste Arretierung. Die Gegenverzahnung 33 des Zentrier- und Halteteils 4 kann länger sein als die Verzahnung oder Rändelung 32.

Während die Wischerwelle 2 des Ausführungsbeispiels der Figur 1 eine Antriebswelle ist, handelt es sich bei der Achse 2a der Figur 2 um eine Steuerachse eines Viergelenk-Wischarms 1. Bei solchen speziellen Wischanlagensystemen ist es notwendig, daß die lose Achse 2a beim Festschrauben der Befestigungsmutter 13 gehalten wird und dies wird durch die genannten Rändelungen sicher erreicht. Es ist deshalb kein separates Werkzeug für das Festhalten der Achse 2a notwendig, wenn man die Rändelungen oder Verzahnungen 32, 33 in der Weiterbildung der Erfindung vorsieht. Hierdurch wird selbstverständlich auch die Montage beschleunigt und vereinfacht.

### Bezugszeichenliste

- 1: Wischarm
- 2: Wischerwelle
- 2a: Achse
- 3: Wischerlager
- 4: Zentrier- und Halteteil
- 5: Befestigungsteil
- 6: Durchgangsbohrung
- 7: Ansatz
- 8: Platte
- 9: Haltesteg
- 10: Niederhalter
- 11: Innenkante
- 12: Einführungsschlitz
- 13: Befestigungsmutter
- 14: Ende
- 15: Pfeilrichtung
- 16: Mutterngewinde
- 17: Außenbund
- 18: Innenraum
- 19: Angriffsteil
- 20: Einsteckende
- 21: Innenfläche
- 22: Durchstecköffnung
- 23: Pfeil
- 24: Gewindezapfen
- 25: Außenkonus
- 26: Fläche
- 27: Unterseite
- 28: Sicherungselement
- 29: Schaft
- 30: Kopf
- 31: Rändelung
- 32: Verzahnung
- 33: Verzahnung

## Patentansprüche

1. Wischarm für eine Scheibenwischeranlage, insbesondere für ein Kraftfahrzeug, dessen Befestigungsteil (5) drehfest an einer Wischerwelle (2) oder einer Achse (2a) befestigbar ist und eine Durchstecköffnung (22) für die Wischerwelle (2) oder eine Achse (2a) aufweist, wobei die Durchstecköffnung (22) des Befestigungsteils (5) wenigstens teilweise als Innenkonus ausgebildet ist und der eingreifende Teil der Wischerwelle (2) oder Achse (2a) als korrespondierender Außenkonus (25) ausgebildet ist, wobei des Weiteren das freie Ende (24) der Wischerwelle (2) bzw. Achse (2a) ein Bolzengewinde (16) aufweist, auf das eine Befestigungsmutter (13) oder dergleichen Befestigungsmittel mit Außenbund (17) aufschraubbar ist, die sich auf einer im Gebrauch von der Kraftfahrzeug-Scheibe wegweisenden Fläche (26) des Befestigungsteils (5) abstützt, wobei außerdem in der Aufschraubendstellung die Konusflächen (22, 25) aneinander gepreßt sind, **dadurch gekennzeichnet, daß** auf die Wischerwelle (2) oder Achse (2a) ein eine Durchgangsbohrung (6) aufweisendes Zentrier- und Halteteil (4) aufschiebbar ist, welches das zugeordnete Ende (20) des Befestigungsteils (5) mit dem Bund (17) der Befestigungsmutter (13) oder dergleichen aufnimmt, wobei die Befestigungsmutter (13) oder dergleichen quer zur Durchgangsbohrung (6) in das Zentrier- und Halteteils (4) einschiebbar und mittels eines Sicherungselements (28) gegen Zurückschieben gesichert ist, wobei sich des Weiteren der Außenbund (17) der Befestigungsmutter (13) oder dergleichen aushebesicher im Zentrier- und Halteteil (4) befindet.

2. Wischarm nach Anspruch 1, **dadurch gekennzeichnet, daß** sich die Durchgangsbohrung (6) des Zentrier- und Halteteils (4) im wesentlichen an einem, vorzugsweise rohrförmigen, Ansatz (7) befindet.

3. Wischarm nach Anspruch 2, **dadurch gekennzeichnet, daß** das Zentrier- und Halteteil (4) im wesentlichen aus einer Platte (8) mit dem angeformten, vorzugsweise rohrförmigen, Ansatz (7) sowie einem nach entgegengesetzter Richtung abstehenden, U- oder bogenförmigen Haltesteg (9) besteht, dessen freier Rand zur Bildung eines Niederhalters (10) nach innen hin abgewinkelt ist, wobei der Abstand des Niederhalters (10) von der Platte (8) etwa der gesamten Dicke des quer eingeschobenen Endes (20) des Befestigungsteils (5) und des Bundes (17) der Befestigungsmutter (13) oder dergleichen entspricht.

4. Wischarm nach wenigstens einem der Ansprüche 1 bis 3, **dadurch gekennzeichnet, daß** das Sicherungselement (28) ein Stopfen oder ein stopfenförmigen Ansatz eines Zusatzteils ist, der in eine seinem Schaftquerschnitt entsprechende Öffnung, insbesondere Bohrung (31), des Befestigungsteils (5) rastend und/oder klemmend eingedrückt ist.

5. Wischarm nach wenigstens einem der Ansprüche 2 bis 4, **dadurch gekennzeichnet, daß** der Angriffsteil (19) der Befestigungsmutter (13) ein Mehrkant, insbesondere Sechskant ist.

6. Wischarm nach wenigstens einem der Ansprüche 1 bis 5, **dadurch gekennzeichnet, daß** am Befestigungsteil (5) ein Gelenkteil eines Wischarms (1) um eine in einem Winkel zur Wischerwelle (2) verlaufende Achse schwenkbar gelagert ist.

7. Wischarm nach wenigstens einem der Ansprüche 1 bis 5, **dadurch gekennzeichnet, daß** das Befestigungsteil (5) ein an einer Wischerwelle (2) befestigbarer Antriebshebel oder ein an einer Achse (2a) befetigbarer Steuerhebel eines Viergelenk-Wischarms ist.

8. Wischarm nach Anspruch 7, wobei das Befestigungsteil (5) vorzugsweise ein Steuerhebel eines Viergelenkwischarmes ist, **dadurch gekennzeichnet, daß** sich in der Bohrung (6) des, vorzugsweise rohrförmigen, Ansatzes (7) des Zentrier- und Halteteils (4) eine Rändelung (33) oder Verzahnung befindet, in welche im Montage-Endzustand eine Rändelung (32) oder dergleichen der Wischerwelle (2) oder Achse (2a) eingreift, vorzugsweise jedoch der Achse (2a).

## Claims

1. Wiper arm for a windscreen wiper system, for a motor vehicle in particular, whose fastening component (5) is fixed non-rotatably to a wiper spindle (2) or an axle (2a) and has a through-hole (22) for the wiper spindle (2) or an axle (2a), the through-hole (22) of the fastening component (5) being formed at least partially as an inner cone and the engaging element of the wiper spindle (2) or axle (2a) being formed as a corresponding outer cone (25), and furthermore the free end (24) of the wiper spindle (2) or axle (2a) having a male thread (16) onto which a fixing nut (13) or similar fastening means with an outer collar (17) can be screwed, which fixing nut (13) is supported on a face (26) of the fastening component (5) facing away from the motor vehicle windscreen during use, wherein also in the final screwed-in position the cone faces (22, 25) are pressed against one another, **characterised in that** a centring and retaining component (4) can be pushed onto the wiper spindle (2) or axle (2a), which centring and retaining component (4) has a through-hole (6) and receives the associated end (20) of the fastening component (5) with the collar (17) of the fixing nut (13) or the like, the fixing nut (13) or the like being capable of being pushed into the centring and retaining component (4) transversely to the through-hole (6) and being prevented from sliding back by means of a locking element (28), wherein furthermore the outer collar (17) of the fixing nut (13) or the like is positioned secure from being lifted out in the centring and retaining component (4).

2. Wiper arm according to claim 1, **characterised in that** the through-hole (6) of the centring and retaining component (4) is positioned substantially on an extension piece (7) which is preferably tubular.

3. Wiper arm according to claim 2, **characterised in that** the centring and retaining component (4) consists substantially of a plate (8) with a moulded, preferably tubular, extension piece (7) and a U-shaped or curved retaining web (9) projecting in the opposing direction, whose free edge is angled inwards to form a holding-down device (10), the distance of the holding-down device (10) from the plate (8) being approximately equivalent to the entire thickness of the transversely inserted end (20) of the fastening component (5) and of the collar (17) of the fixing nut (13) or the like.

4. Wiper arm according to at least any one of claims 1 to 3, **characterised in that** the locking element (28) is a plug or a plug-shaped extension of an accessory element which is pressed to notch and/or clamp into an aperture, in particular a bore (31), corresponding to its shaft cross-section, of the fastening component (5).

5. Wiper arm according to at least any one of claims 2 to 4, **characterised in that** the engaging element (19) of the fixing nut (13) is a polygon, in particular a hexagon.

6. Wiper arm according to at least any one of claims 1 to 5, **characterised in that** an articulated component of a wiper arm (1) on the fastening component (5) is supported pivotally around an axle running at an angle to the wiper spindle (2).

7. Wiper arm according to at least any one of claims 1 to 5, **characterised in that** the fastening component (5) is a drive lever mountable on a wiper spindle (2), or a control lever mountable on an axle (2a), of a four-link wiper arm.

8. Wiper arm according to claim 7, **characterised in that** the fastening component (5) is preferably a control lever of a four-link wiper arm, **characterised in that** a knurling (33) or toothing is arranged in the bore (6) of the, preferably tubular, extension piece (7) of the centring and retaining component (4) with which knurling (33) or toothing a knurling (32) or the like of the wiper spindle (2) or axle (2a), preferably however of the axle (2a), engages in the final assembly state.

## Revendications

1. Bras de monture d'essuie-glace pour une installation d'essuie-glace, en particulier pour un véhicule automobile, dont l'élément de fixation (5) peut être fixé de manière liée en rotation à un arbre porte-balai (2) ou à un axe (2a) et présente une ouverture traversante (22) pour l'arbre porte-balai (2) ou un axe (2a), l'ouverture traversante (22) de l'élément de fixation (5) étant configurée au moins en partie sous la forme d'un cône intérieur et l'élément en prise de l'arbre porte-balai (2) ou de l'axe (2a) est configuré sous la forme d'un cône extérieur (25) correspondant, l'extrémité libre (24) de l'arbre porte-balai (2) ou de l'axe (2a) présentant, en outre, un filet extérieur (16), sur lequel peut être vissé un écrou de fixation (13) ou un moyen de fixation similaire avec un collet extérieur (17), lequel écrou repose sur une surface opposée à la vitre du véhicule (26) lors de l'utilisation, les surfaces coniques (22, 25) étant, en outre, comprimées les unes contre les autres, dans la position de vissage, **caractérisé en ce que** sur l'arbre porte-balai (2) ou axe (2a), un élément de centrage et de maintien (4) présentant un alésage débouchant (6) peut coulisser, qui reçoit l'extrémité associée (20) de l'élément de fixation (5) avec le collet (17) de l'écrou de fixation (13) ou similaire, moyennant quoi l'écrou de fixation (13) ou similaire peut être enfoncé transversalement par rapport à l'alésage débouchant (6) dans l'élément de centrage et de maintien (4) alors que son retrait est empêché par un élément de sécurité (28), le collet extérieur (17) de l'écrou de fixation (13) ou similaire se trouvant, en outre, dans l'élément de centrage et de maintien (4) de manière à ne pas pouvoir être extrait.

2. Bras de monture d'essuie-glace selon la revendication 1, **caractérisé en ce que** l'alésage débouchant (6) de l'élément de centrage et de maintien (4) se trouve de préférence au niveau d'une saillie (7) tubulaire.

3. Bras de monture d'essuie-glace selon la revendication 2, **caractérisé en ce que** l'élément de centrage et de maintien (4) est constitué principalement d'une plaque (8) présentant la saillie (7) formée, de préférence tubulaire, et une barre de maintien (9) présentant une forme arquée ou de U séparée du reste, dont le bord libre forme un angle de déviation vers l'intérieur pour former un serre-flan (10), la distance entre le serre-flan (10) et la plaque (8) correspondant environ à l'épaisseur totale de l'extrémité (20) enfoncée transversalement de l'élément de fixation (5) et du collet (7) de l'écrou de fixation (13) ou similaire.

4. Bras de monture d'essuie-glace selon au moins l'une quelconque des revendications 1 à 3, **caractérisé en ce que** l'élément de sécurité (28) est un bouchon ou une saillie en forme de bouchon d'un élément supplémentaire, qui est enfoncé par encliquetage et / ou par serrage dans une ouverture correspondant à sa section de tige, en particulier un alésage (31).

5. Bras de monture d'essuie-glace selon l'une quelconque des revendications 2 à 4, **caractérisé en ce que** l'élément de préhension (19) de l'écrou de fixation (13) est un élément polygonal, en particulier un hexagone.

6. Bras de monture d'essuie-glace selon l'une quelconque des revendications 1 à 5, **caractérisé en ce que**, au niveau de l'élément de fixation (5), un élément articulé d'un bras de monture d'essuie-glace (1) est disposé autour d'un axe se déplaçant selon un angle par rapport à l'arbre porte-balai (2).

7. Bras de monture d'essuie-glace selon l'une quelconque des revendications 1 à 5, **caractérisé en ce que** l'élément de fixation (5) est un levier d'entraînement pouvant être fixé au niveau d'un arbre porte-balai (2) ou un levier de commande pouvant être fixé au niveau d'un axe (2a) d'un bras de monture d'essuie-glace à quatre joints articulés.

8. Bras de monture d'essuie-glace selon la revendication 7, dans lequel l'élément de fixation (5) est de préférence un levier de commande d'un bras de monture d'essuie-glace à quatre joints articulés, **caractérisé en ce que**, dans l'alésage (6) de la saillie (7) de préférence tubulaire de l'élément de centrage et de maintien (4), s'engrène un moletage (33) ou une denture, avec lequel ou laquelle coopère, dans l'état final du montage, un moletage (32) ou similaire de l'arbre porte-balai (2) ou de l'axe (2a), de préférence toutefois de l'axe (2a).
